# EUROPEAN PATENT APPLICATION

(11) **EP 3 907 684 A1**
(43) Date of publication of application: **10.11.2021**
(21) Application number: 21170671.8
(22) Date of filing: 27.04.2021
(51) Int. Cl.: G06Q 20/40, G06Q 40/02

(54) **SYSTEM AND METHOD FOR FRAUD TRACKING AND PROCESS MANAGEMENT**

(30) Priority: 05.05.2020 TR 202006981
(71) Applicant: IHS Kurumsal Teknoloji Hizmetleri Anonim Sirketi, Istanbul (TR)
(72) Inventor: OZKAN, BULENT, ISTANBUL (TR)
(74) Representative: Kaya, Erdem

(57) **Abstract**

The invention is related to a system and a method enabling the users to manage the processes related to fraud cases and access the detailed operation information kept in subsystems and applications in a normal process over a single application by integrating a plurality of fraud detection systems (6) and fraud operation systems (7) used currently by the banks into its own structure.

## Description

### Technical Field

The invention is related to a system and a method enabling the users to manage the processes related to fraud cases and access the detailed operation information kept in sub-systems and applications in a normal process over a single application by integrating a plurality of fraud detection systems and fraud operation systems used currently by the banks and constitutions such as financial institutions into its own structure.

The invention is more particularly related to a system and a method enabling to assign cases to the users, generate statistical information by tracking the operations carried out by the users on the cases, thereby decrease the operational load for the users, generate the performance reports and increase the end-to-end traceability of fraud process over a single center.

### State of the Art

Nowadays, the fraud operation systems use their means only in their own systems to create case records and therefore, only the rules related to the case generation and the case records are present on these systems. This requires the users to carry out a backward search in cases they need to make detailed research related to a case record by accessing all of the sub-systems which keep the operation records and may have different structures with the methods that created the case and most of them do not comprise an interface. Therefore this increases the time spent on the case research and finding a solution as well as the possibility of user error.

A similar deficiency in the present application is applied to the fraud detection systems as well. Some of the fraud detection systems adopt an approach for solving the cases created by themselves in their own structure. This reduces the performance of fraud detection systems as well as causes many processes that can be tracked specifically to the cases to be kept limited since the fraud detection systems are detection-driven.

As a result of the research related to this subject, the application titled "Dolandincilik ve/veya yeterlilik kontrolü için bir sistem" (A system for fraud and/or qualification control) numbered TR2013/09752 has come across. This application is related to a system in which information such as blacklists, bills, credit ratings, etc. about the clients of the financial institutions such as banks, insurance companies, participation banks, factoring companies, leasing companies as well as GSM operators are used in mutual fraud and/or qualification control, Said system comprises a database in which the information related to the clients of GSM operators and/or financial institutions are kept, an interface used for accessing the information related to the clients in the database, at least one informing unit accessing the information related to the customers in the database in accordance with the instruction inputted from the interface, an interrogation unit interrogating the permission record for information access and/or asking for permission to deliver the information from the customer to the related institution, and a confirmation unit informing the GSM operator and/or finance institution upon the positive and/or negative response from the interrogation unit. However, the system mentioned in this application is similar to existing systems and thus cannot enable displaying all of the operations belong to any case present in the subs-systems by means of case-operation information matching. This system, by its nature, is qualified as a pool that can enable information exchange between different companies or systems and thus is not a central system for case process management.

Consequently, because of the above-mentioned disadvantages, the insufficiency related to the subject of the present solutions and the non-existence of an equivalent system related to the subject, a need for improvement in the related technical field has occurred.

### Aim of the Invention

The invention is created upon the current situations and aims to eliminate the above-mentioned disadvantages.

The aim of the present invention is to enable to access detailed information for both case and operation by being integral to all of the fraud detection solutions used in any system as well as display all of the operations belong to any case present in the subs-systems by means of "the case-operation information" matching.

Another aim of the invention is to enable a balanced distribution of load among the users by means of making the case assignment automatically as well as prevent the users to take only the cases that can be solved easily and leave the more difficult cases in the pool.

Another aim of the invention is to enable to make the case assignment automatically and solve the cases more effectively by means of assigning the case to the operators that possess suitable competence and authorization and/or according to the degree of difficulty/importance of the cases.

Another aim of the invention is to aid to reduce the lost time by using the data indicating how much time is spent by the users for case solving during the time out by means of statistical data interference, enable more efficient resource usage by making it possible to estimate the workload, and detect the methods on which the threats are focused by means of the reports for case history.

Another aim of the invention is to make it possible to execute a number of automation procedures on the cases and operations delivered thereto. Thus, it will make it possible to perform many arrangements such as creating the case or not, rejecting the case, providing confirmation or information over an SMS or e-mail by making examinations on the incoming data.

Another aim of the invention is to allow to examine the detailed operation records of any case to be formed thereon in the other systems in a fast and easy manner, provide a balance of the workload distribution among the users, enable to increase the case-solving speed of the users as well as the number of solved cases in a day and track the general performance by means of reporting.

The structural and characteristic features of the invention and all of the advantages thereof will be better understand with the figures given below and the detailed description made by referring to these figures, and therefore the evaluation has to be made by considering these figures and the detailed description.

### Figures for Understanding the Invention

**Figure 1****,** a flowchart view of the fraud tracking and process management method subject to the invention.
**Figure 2****,** a flowchart view of the case flow.

### Description of the Reference Signs

### U. User

1. Front interface
2. Balancer
3. Rear interface
4. SQL database
5. Research database
6. Detection system
7. Operation system
8. Automation unit
1000. Performing an operation on the case, examining the operations and reports as well as carrying out systemic changes by the user
1001. Delivering the changes such as case and operation changes by the user
1002. Performing the case and operation method, making the case assignment to users as well as preparing the reports related to the case and users
1003. Delivering the case and operation information to the front interface
1004. Delivering the case updates
1005. Making the case assignments
1006. Delivering the cases
1007. Reading the data
1008. Storing the data
1009. Delivering the case data
1010. Delivering the operation data
1011. Balancing the incoming traffic load by directing it
1012. Creating the case data from the operation data
1013. Logging in to the system
1014. Log in page
1015. Logging in with the user name and password
1016. Logging out
1017. Determining the user type
1018. If the user is an operator
1019. If the user is an administrator
1020. Case waiting page
1021. Case list page
1022. Assigning a case to the user
2011. Case detail page
2012. Pressing the case closure button
2013. Case closure menu screen
2014. Selecting the case solution, the reason and the explanation
2015. Case closure approval menu screen
2016. Pressing the return button
2017. Closing the case
2018. Holding the case
2019. Pressing the case holding button
2020. Case holding menu screen
2021. Case holding approval menu screen
2022. Approving after selecting the holding reason and time
2023. Pressing the case assignment button
2024. Case assignment menu screen
2025. Assigning the case to the operator and closing the menu screen
2026. Clicking on a case number from the list
2027. Expiring of the case holding time

### Detailed Description of the Invention

In this detailed description, the preferred embodiments of the system and method for fraud tracking and process management subject to the invention are described only for a better understanding of the subject.

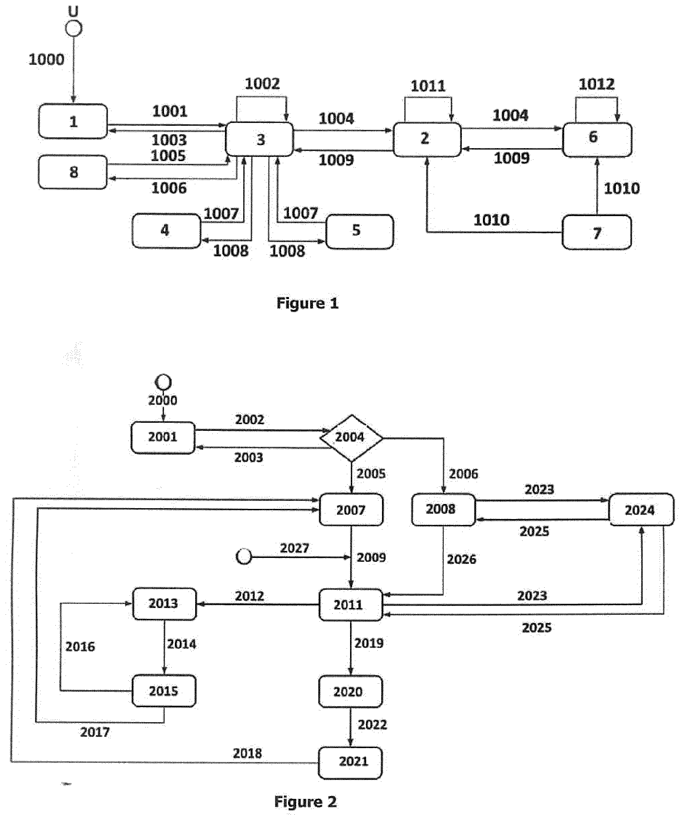

The factors participating in performing the method of which the flowchart has given in Figure 1 are as follows:
- The front interface (1) enables the users to log in to the system and view the case and operation details.
- The balancer (2) enables the case and operation traffic coming from the fraud detection system (6) and the fraud operation system (7) to be distributed in a balanced manner in the rear interface (3).
- The rear interface (3) enables to display and search the case and operation data coming from the fraud detection systems (6) and the fraud operation systems (7) as well as to perform operations thereon by being integrated into these systems. Delivers the updates related to the case to the fraud detection systems (6).
- The SQL database (4) enables storing the cases.
- The research database (5) stores the event data of the operation having a high operation volume and enables rapid access to these data.
- The fraud detection system (6) creates the case on its own system and the system to which it is integrated.
- The fraud operation system (7) keeps the records of the detailed information related to the operation performed in the bank channels.
- The automation unit (8) enables to identify dynamically a number of rules for all of the incoming operations, make searches and changes in the incoming data, apply some of the rules and integrate with the external systems.

The operation steps of the method subject to the invention enabling to manage the processes related to fraud cases and access the detailed operation information kept in sub-systems and applications over a single system by operating integrally with the fraud detection systems (6) and the fraud operation systems (7) used by the banks are as follows:
- reaching and logging in to the system over the front interface (1) by the users (U),
- delivering (1001) the requests made by the users (U) over the front interface (1) and the background tasks scheduled/triggered to the rear interface (3),
- delivering the cases and operations coming from the detection system (6) and the operation system (7) to the system,
- delivering (1011) the load to the rear interface (3) by distributing it with controlling the request traffic during the case (1009) and operation (1010) transmission by the balancer (2),
- performing the operations such as reading (1007), writing (1008) and updating on the SQL database (4) or the research database (5) according to the operation type by the rear interface (4),
- delivering (1006) the cases to the automation unit (8) or receiving (1005) the case assignments coming from the automation unit (8) by the rear interface (3),
- performing the case and operation management, making the case assignments to the users (U) and preparing the users (U) reports by the rear interface (3) (1002),
- presenting (1003) over the front interface (1) the case and operation information to the users (U) by the rear interface (3),
- delivering (1004) the solutions assigned to the cases by the users (U) from the rear interface (3) to the fraud detection system (6).

The fraud operation system (7) and the fraud detection system (6) installed in the operation equipment of the banks are integrated into the system. The detection system (6) creates the case by using the operation data coming from the operation system (7) (1012). Then, the case and operation information is delivered from the detection system (6) and the operation system (7) to the rear interface (3). While this information is delivering, the balancer (2) balances the load distribution by controlling the traffic.

The case and operation information arriving at the rear interface (3) is recorded to the SQL database (4) or the research database (5) according to the types thereof.

### The Case Flow of which the flowchart view has given in Figure 2:

The user (U) logs in to the system over the front interface (1) (2000) and based on his/her authorization, if he/she is an operator (2005), then the user is directed to the case detail page (2011) and if he/she is an administrator (2006), then the user is directed to the case list page (2008).

### Operator user (U):

When on the case detail page (2011), if there is not a case assigned to him/her, then the case waiting page (2007) is displayed and the automation unit (8) operates in the background for assigning (2009) a case to the operator. If there is not an open case in the system, then the operator is kept waiting. If there is an open case the case (2009) is assigned to the user (U) by the automation unit (8) and the user is directed to the case detail page (2011). After that, if the user (U) has solved the case, then he/she proceeds (2013) to closure screens by pressing (2012) the case closure button and fills out (2014) the reason and explanation areas. Approval is received (2015) for the last time from the user (U) before the case closure and the case is closed (2017) after the approval has been received. Solving the case assigned to the user (U) by him/herself is carried out by sending a case update request to the detection system (6) to which the case is sent by the rear interface (3). After the case is closed, the user (U) is directed to the case waiting page (2007) and the process is reinitiated. If the user (U) wants to hold the case, then he/she presses (2019) the holding button and opens the case holding (pop-up) menu screen (2020). On this screen, the holding time is selected by the user (U) (2022), then the case holding approval page (2021) is displayed to the user (U) and the case is held for the determined time after the approval (2018). A new case can be assigned to the user (U) during this period. The case of which the holding time is expired (2027), when applicable, is assigned to the user (U) initiating the holding.

### Administrator user (U):

Said user can activate (2023) a case selected from the list when he/she is on the case list page (2008) in the system and make assignments (2025) for the users that do not have any case. Additionally, the administrator user is directed to the detail page (2011) by clicking (2026) on a case selected from the case list page (2008) and can view the detailed contents. When the administrator user is on the case detail page (2011) for a case can make case assignments to the users (U) that are active on the system and do not have any case for this case.

### Automation unit (8) operation:

On the cases and operations delivered from the rear interface (3), several operations may be applied that can be determined by the user (U) according to the data contained therein and the resources from which they come. For example, if the urgency of the incoming case is low, then a triggering can be provided over an approval SMS for this case immediately before it appears to the users (U). If this SMS approval is successful, then it proceeds without the case is created in the system and if the SMS approval is not successful, then the case is created and can be assigned to the users (U). Thus, the system is not just a system that makes it possible to case examination, but a system in which the rules can be written and that allows taking various actions in accordance with these rules as well as can execute these written rules in determined periods of time.

## Claims

1. A system enabling to manage the processes related to fraud cases and access the detailed operation information kept in sub-systems and applications over a single system by operating integrally with the fraud detection systems (6) and the fraud operation systems (7) used by the banks, **characterized in that** it comprises;
• a front interface (1) enabling the users to log in to the system and view the case and operation details,
• a balancer (2) enabling the case and operation traffic coming from the fraud detection system (6) and the fraud operation system (7) to be distributed in a balanced manner in the rear interface (3),
• a rear interface (3) enabling to display and search the case and operation data coming from the fraud detection systems (6) and the fraud operation systems (7) as well as to perform operations thereon and delivering updates related to the case to detection systems (6),
• an SQL database (4) storing the case data,
• a research database (5) storing the frequently used data and events,
• an automation unit (8) making the case assignment.

2. A method enabling to manage the processes related to fraud cases and access the detailed operation information kept in sub-systems and applications over a single system by operating integrally with the fraud detection systems (6) and the fraud operation systems (7) used by the banks, **characterized in that** it comprises the following operation steps;
• logging in to the system over the front interface (1) by the users (U),
• delivering (1001) the requests made by the users (U) over the front interface (1) and the background tasks scheduled and triggered to the rear interface (3),
• delivering the cases and operations coming from the detection system (6) and the operation system (7) to the system,
• delivering (1011) the load to the rear interface (3) by distributing it with controlling the request traffic during the case (1009) and operation (1010) transmission by the balancer (2),
• performing the operations of reading (1007), writing (1008) and updating on the SQL database (4) or the research database (5) according to the operation type by the rear interface (3),
• delivering (1006) the cases to the automation unit (8) or receiving (1005) the case assignments coming from the automation unit (8) by the rear interface (3),
• performing the case and operation management, making the case assignments to the users (U) and preparing the users (U) reports by the rear interface (3) (1002),
• presenting (1003) over the front interface (1) the case and operation information to the users (U) by the rear interface (3),
• delivering (1004) the solutions assigned to the cases by the users (U) from the rear interface (3) to the fraud detection system (6).

3. The method according to claim 2, **characterized in that** it comprises the following operation steps if the user (U) is an operator,
• displaying the case waiting page (2007) when the user (U) is on the case detail page (2011) if there is not a case assigned to him/her,
• continuing to display the case waiting page (2007) if there is not an open case,
• assigning the case (2009) to the user (U) by the automation unit (8) and directing the user to the case detail page (2011) if there is an open case,
• proceeding (2013) to closure screens by pressing (2012) the case closure button and filling out (2014) the reason and explanation areas if the user (U) has solved the case,
• receiving (2015) approval for the last time from the user (U) before the case closure and closing (2017) the case after the approval has been received,
• directing the user (U) to the case waiting page (2007) and reinitiating the process,
• pressing (2019) the holding button and opening the case holding menu screen (2020) if the user (U) wants to hold the case,
• selecting (2022) the holding process by the user (U) and displaying the case holding approval screen (2021) to the user (U),
• reassigning the case of which the holding time is expired (2027) after holding (2018) the case for a determined time to the user (U) initiating the holding.

4. The method according to claim 2, **characterized in that** it comprises the following operation steps if the user (U) is an administrator,
• directing to the detail page (2011) by clicking (2026) on a case selected from the case list page (2008) and displaying the detailed contents,
• activating (2023) a case selected from the case list page (2008) or making an assignment (2025) to the users (U) that do not have any case.
